(19) Europäisches Patentamt
European Patent Office
Office européen des brevets

(11) EP 2 792 504 B1

# (12) EUROPEAN PATENT SPECIFICATION

(45) Date of publication and mention of the grant of the patent:
**01.03.2017 Bulletin 2017/09**

(21) Application number: **11877233.4**

(22) Date of filing: **16.12.2011**

(51) Int Cl.:
***B60C 11/11*** $^{(2006.01)}$ ***B60C 11/00*** $^{(2006.01)}$
***B60C 11/13*** $^{(2006.01)}$ ***B60C 11/12*** $^{(2006.01)}$
***B60C 11/14*** $^{(2006.01)}$

(86) International application number:
**PCT/JP2011/079186**

(87) International publication number:
**WO 2013/088570 (20.06.2013 Gazette 2013/25)**

## (54) TREAD FOR PNEUMATIC TIRE

LAUFFLÄCHE FÜR EINEN LUFTREIFEN

BANDE DE ROULEMENT POUR PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.10.2014 Bulletin 2014/43**

(73) Proprietors:
- **Compagnie Générale des Etablissements Michelin
63000 Clermont-Ferrand (FR)**
- **MICHELIN Recherche et Technique S.A.
1763 Granges-Paccot (CH)**

(72) Inventor: **KANEKO, Shuichi
Tokyo 163-1073 (JP)**

(74) Representative: **Diernaz, Christian
M. F. P. Michelin,
23, place des Carmes Dechaux,
DGD/PI-F35-Ladoux
63040 Clermont-Ferrand Cedex 09 (FR)**

(56) References cited:
**WO-A1-2005/044594**
**JP-A- S6 094 805**
**JP-A- H02 249 707**
**JP-A- H08 175 116**
**JP-A- H09 193 618**
**JP-A- 2006 076 529**
**JP-A- 2010 047 072**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 792 504 B1

## Description

Technical field

The present invention relates to a tread for a pneumatic tyre, and in particular relates to a tread for a pneumatic tyre with which performance on snow and performance on ice are improved by means of a reinforcing layer provided in a block, and to a pneumatic tyre having such a tread.

Background art

Tyres for winter use, also known as studless tyres, are well known as tyres which can be driven on winter roads covered with snow or ice. In tyres for winter use, adhesion to winter road surfaces is typically improved by means of a water film removing effect and by means of a so-called edge effect, obtained by providing a plurality of so-called sipes, narrow incisions which open at the ground-contacting surface, and by using a compound that is softer than that of tyres not for winter use.

The mechanism whereby a frictional force with the road surface is generated is in reality different for snow and ice, and it is known that a combination that is preferable for improving performance on ice, namely using a soft compound and providing multiple narrow incisions in blocks, which are ground-contacting elements, results in a reduction in the block rigidity, thereby hindering improvements in performance on snow.

It is known that introducing reinforcing layers on the side walls of the blocks is an effective means to obtain satisfactory performance simultaneously on both ice and snow, and Figure 3 of patent literature article 1 discloses a technique for achieving both performance on snow and performance on ice by providing reinforcing layers using rubber having a JIS A hardness of 80 to 95 degrees on block side walls facing a transverse groove and an auxiliary groove, in a block provided with three narrow incisions and one auxiliary groove.

Further, Figure 2 of patent literature article 2 discloses a technique for achieving both performance on snow and performance on ice by adopting a composition in which 50 parts or more by weight of at least one of carbon black and silica is combined with 100 parts by weight of a diene rubber containing 30% or more by weight of a rubber component having a glass transition temperature at least equal to -60°C, and providing reinforcing layers employing rubber having a brittleness temperature at most equal to -30°C on the side walls of the blocks.

Prior art literature

Patent literature

Patent literature article 1: Japanese Patent Kokai 1995-047814

Patent literature article 2: Japanese Patent Kokai 2010-105509

WO2005/044594 discloses a tread for a pneumatic tyre having the features of the preamble of the main claim.

Summary of the invention

Problems to be resolved by the invention

However, with the techniques disclosed in patent literature article 1 and patent literature article 2, performance on snow and performance on ice are not both achieved optimally, and from the viewpoint of safety when driving on winter road surfaces, there are demands for pneumatic tyres with which performance on snow and performance on ice can both be achieved to a higher level.

Accordingly, the present invention is intended to resolve the problems faced by the prior art described above, and its object is to provide a tread for a pneumatic tyre with which performance on snow and performance on ice can both be achieved to a higher level, and in which reinforcing layers are provided on side wall portions of ground-contacting elements, and to a pneumatic tyre having such a tread.

Means of overcoming the problems

In order to achieve the abovementioned object, the present invention is a tread for a pneumatic tyre having a ground-contacting surface which comes into contact with a road surface when the tyre is rolling and being formed from at least one rubber composition, characterized in that it has at least one main groove which is formed in the tread, a plurality of auxiliary grooves, and blocks which are ground-contacting elements delimited by the main groove and the auxiliary grooves, in that the blocks have a plurality of side wall portions facing the main groove and/or the auxiliary grooves, and in that at least one side wall portion from the plurality of side wall portions in the block has a reinforcing layer, the reinforcing layer having a mean thickness less than 0.5 mm and being provided such that it faces the main groove and/or the auxiliary groove over an area at least equal to 50% of the side wall portion, and the reinforcing layer having a material modulus at least equal to 200 MPa.

Here, 'groove' refers to a space having a width and a depth and configured by connecting two opposing surfaces (wall surfaces) which under normal usage conditions do not come into contact with each other, by means of another surface (a bottom surface).

Also, 'main groove' refers to a groove that is predominantly responsible for draining fluids and is relatively wide among the various grooves that are formed in the tread. In many cases 'main groove' means a groove which extends in the circumferential direction of the tyre in a linear, zigzag or undulating fashion, but relatively wide grooves which extend at an angle to the direction of rotation of the tyre and are predominantly responsible for drainage of fluids are also included.

Further, grooves other than the 'main groove' are called 'auxiliary grooves'.

Further, 'side wall portion of a block' refers to a transverse wall that faces a groove, being a subset of the surfaces constituting a block, which is a ground-contacting element. If the block, which is a ground-contacting element, is located in an outermost portion of the tread, in the width direction, transverse walls facing outward from the tread are also included.

Further, portions where the side wall portions of the block intersect with the ground-contacting portion (ground-contacting surface) that comes into contact with the road surface when rolling are called 'edges'.

Further, 'material modulus' refers to the dynamic shear complex modulus (dynamic shear modulus: G*) of the material at -10°C. The storage elastic modulus represented by G' and the loss elastic modulus represented by G", which are well known dynamic properties for one skilled in the art, are measured by means of a viscosity analyser (viscoanalyser: Metravib VB4000) using a test piece moulded from the raw composition or a test piece which is combined with the composition after vulcanization. The test piece that is used is one that is described in Figure X2.1 (a circular method) of the standard ASTM D 5992-96 (version published September 2006, initially approved in 1996). The diameter 'd' of the test piece is 10 mm (consequently the test piece has a circular cross section of 78.5 $mm^2$), the thickness 'L' of each part of the rubber compound is 2 mm, and the ratio 'd/L' (described in paragraph X2.4 of the ASTM standard, in contrast to the ratio 'd/L' of 2 recommended in the standard ISO 2856) is 5. In the test, the response of a test piece comprising a vulcanized rubber composition subjected to a simple alternating sinusoidal shear load is measured at a frequency of 10 Hz. The maximum shear stress imposed during the test is 0.7 MPa. The test is conducted by varying the temperature from Tmin, which is a temperature lower than the glass transition temperature (Tg) of the rubber material, to a maximum temperature Tmax, in the vicinity of 100°C, at a rate of 1.5°C per minute. The test piece is stabilized for approximately 20 minutes at Tmin prior to the start of the test in order to obtain a satisfactory uniformity of temperature within the test piece. The results obtained are the storage elastic modulus (G') and the loss elastic modulus (G") at the prescribed temperature. The complex modulus G* is defined in terms of the absolute values of the storage elastic modulus and the loss elastic modulus using the following formula:

$$G^* = \sqrt{G'^2 + G''^2}$$

In the case of fibrous materials such as woven or non-woven fabrics impregnated with a material based on natural resin, the 'material modulus' is found by dividing the maximum load measured by means of a strip method described in the standard JIS K 6404-3, by the cross-sectional area of the test piece.

In the present invention configured as described hereinabove, in the side wall portions on which reinforcing layers are provided, from among the side wall portions of the block, reinforcing layers are provided over an area at least equal to 50% of the side wall portions, and therefore a localized high edge pressure can be obtained when driving on a road surface in which the coefficient of friction of the road surface is sufficiently high to cause the ground-contacting element to deform, as is the case on snow. Therefore the edges of the block can be made to cut into the snow, and as a result the performance on snow can be improved. Such effects are more pronounced with a reinforcing layer having a material modulus at least equal to 200 MPa.

Further, in the present invention the mean thickness of the reinforcing layers provided on the side wall portions of the block is less than 0.5 mm, and therefore when driving on a road surface in which the coefficient of friction of the road surface is insufficient to cause the ground-contacting element to deform, as is the case on ice, the contact pressure of the block as a whole can be maintained more uniformly while allowing the edge effect to be exhibited. Therefore the whole block can come into uniform contact with the road surface, even though reinforcing layers are provided on the side wall portions of the block, and as a result the performance on ice can be more reliably maintained. To elaborate, if the mean thickness of the reinforcing layers is equal to or greater than 0.5 mm, then when driving on a road surface in which the coefficient of friction of the road surface is insufficient to cause the ground-contacting element to deform, as is the case on ice, minute deformations of the ground-contacting element cause large loads to act on the reinforcing layer, resulting in localized increases in the contact pressure, and there is thus a danger that the performance on ice will deteriorate.

In the present invention, the reinforcing layer is preferably provided on at least two side wall portions of the block, facing in the direction of rotation of the tyre.

In the present invention configured in this way, a locally high edge pressure can be obtained by means of the block side wall portions provided with reinforcing layers, during both acceleration and deceleration on snow, and as a result the performance on snow can be improved while maintaining the performance on ice.

In the present invention, preferably the abovementioned block further has at least one narrow incision, and two wall surface portions of the narrow incision each have second reinforcing layers, the second reinforcing layers having a mean thickness of less than 0.5 mm and being provided such that they face the narrow incision over an area at least equal to 50% of the two wall surface portions of the narrow incision.

Here, 'narrow incision' refers to an incision formed by a knife blade or the like, also known as a so-called sipe, the width of the narrow incision at the tread outer surface being relatively small compared predominantly with the auxiliary grooves, being generally at most equal to 2 mm. Portions where the narrow incisions intersect with the ground-contacting surface of the block, which is a ground-contacting element, are also called 'edges'.

In the present invention configured in this way, a locally high edge pressure can also be generated at the edges of the narrow incisions, by means of the second reinforcing layers provided in the narrow incision portions, and as a result it is possible more reliably for the performance on snow to be improved while the performance on ice is maintained.

In the present invention, the mean thickness of the reinforcing layer and/or the second reinforcing layer is preferably at most equal to 0.3 mm, and more preferably at most equal to 0.2 mm.

In the present invention configured in this way, the contact pressure of the block as a whole on ice can be made more uniform while allowing a high edge pressure to be generated on snow by means of the effect of the reinforcing layer, and as a result it is possible more reliably for the performance on snow to be improved while maintaining the performance on ice.

In the present invention, the reinforcing layer is preferably formed on the side wall portion of the block within an area extending from a height position that is 1.6 mm towards the outside in the radial direction of the tyre relative to the height, in the radial direction of the tyre, of the bottom surface of the main groove or the auxiliary groove, to the height position, in the radial direction of the tyre, of the ground-contacting surface of the ground-contacting element.

In the present invention configured in this way, the degree of freedom for positioning and setting the range of the reinforcing layer on the block side wall portion can be increased so as to improve the performance on snow while maintaining the performance on ice, and by this means it is possible more effectively to improve the performance on snow while maintaining the performance on ice.

In the present invention, the second reinforcing layer is preferably formed on the side wall portion of the narrow incision within an area extending from a height position that is 1.6 mm towards the outside in the radial direction of the tyre relative to the height, in the radial direction of the tyre, of the bottom portion of the narrow incision, to the height position, in the radial direction of the tyre, of the ground-contacting surface of the ground-contacting element.

In the present invention configured in this way, the degree of freedom for positioning and setting the range of the second reinforcing layer on the narrow incision side wall portion can be increased so as to improve the performance on snow while maintaining the performance on ice, and by this means it is possible more effectively to improve the performance on snow while maintaining the performance on ice.

Advantages of the invention

When the tread for a pneumatic tyre according to the present invention, and a pneumatic tyre having such a tread, are employed, the performance on snow can be improved while maintaining the performance on ice.

Brief explanation of the figures

[Figure 1] is a drawing illustrating schematically a tread for a pneumatic tyre according to a first mode of embodiment of the present invention.

[Figure 2] is an enlarged sectional view of a ground-contacting element (block) in a tread for a pneumatic tyre as viewed along line II-II in Figure 1.

[Figure 3] is an enlarged sectional view of a ground-contacting element (block) in a tread for a pneumatic tyre according to a second mode of embodiment of the present invention.

[Figure 4] is an enlarged sectional view of a ground-contacting element (block) in a tread for a pneumatic tyre according to a third mode of embodiment of the present invention.

Modes of embodying the invention

Preferred modes of embodiment of the present invention will now be described with reference to the drawings.

First, a tread for a pneumatic tyre according to a first mode of embodiment of the present invention will be described based on Figure 1 and Figure 2.

Figure 1 is a drawing illustrating schematically a tread for a pneumatic tyre according to a first mode of embodiment of the present invention, and Figure 2 is an enlarged sectional view illustrating schematically a block, which is a ground-contacting element, in a tread for a pneumatic tyre according to the first mode of embodiment of the present invention.

First, as illustrated in Figure 1, reference code 1 indicates a tread 1 for a pneumatic tyre according to the first mode of embodiment of the present invention. It should be noted that the size of the tyre in this example is 205/55R16, and the tread 1 is one in which the direction of rotation of the tyre is not prescribed.

Ground-contacting elements (blocks) 5 having a ground-contacting surface 2 which comes into contact with the road surface when the tyre is rolling, and demarcated by main grooves 3 and auxiliary grooves 4, are formed in the tread 1. In each ground-contacting element 5, reinforcing layers 6 shaped such that a portion thereof is exposed in the ground-contacting surface 2 are formed on the block side wall portions facing in the direction of rotation of the tyre, in other words on the two side wall portions 5a facing the auxiliary grooves 4. In the present mode of embodiment, the length (the dimension in the direction of rotation of the tyre) of the block 5 including the reinforcing layers 6 is 30 mm, and the width (the dimension in the width direction of the tyre) is 20 mm.

Next, each reinforcing layer 6 is formed over a range at least equal to 50% of the area of each block side wall portion 5a. The area of each block side wall portion 5a is the area of the respective part of the block 5 facing each groove 4. The parts of each block side wall portion 5a other than the reinforcing layers 6 are formed from the material of the block 5 itself. In the present mode of embodiment, each reinforcing layer 6 has substantially the same dimension in the width direction as the length in the width direction of each block 5, as illustrated in Figure 1, and is formed extending substantially from the bottom surface 4a of the auxiliary groove 4 to the ground-contacting surface 2 of the ground-contacting element 5, as illustrated in Figure 2.

Here, in the present mode of embodiment, the depth of the main grooves 3 and the auxiliary grooves 4 is 8 mm, and the reinforcing layers 6 have a height dimension in the height direction of the block 5 substantially equal to 8 mm. Thus in the present mode of embodiment each reinforcing layer 6 is formed over substantially 100% of the area of each block side wall portion 5a.

The mean thickness of the reinforcing layer 6 is less than 0.5 mm, preferably at most equal to 0.3 mm, and more preferably at most equal to 0.2 mm. The reinforcing layers 6 in the present mode of embodiment have a mean thickness of 0.15 mm, and they have a substantially constant thickness. The thickness of the reinforcing layer 6 is the thickness in a direction perpendicular to the outer surface of the side wall portion 5a facing the auxiliary groove 4, and the mean thickness is the mean of the values measured between the auxiliary groove 4 bottom surface 4a side and the ground-contacting element 5 ground-contacting surface 2 side of the reinforcing layer 6, in other words the mean of the values over substantially the whole of the reinforcing layer 6.

The reinforcing layer 6 has a material modulus at least equal to 200 MPa. In the present mode of embodiment, the material from which the reinforcing layers 6 are formed is a material based on natural resin, having a material modulus of 300 MPa. It should be noted that the material modulus of the material of the ground-contacting element 5 itself is at most equal to 10 MPa.

In the present mode of embodiment formed in this way, first, by means of the reinforcing layers 6 provided such that they face the auxiliary grooves 4 over an area at least equal to 50% of the side wall portions 5a on which reinforcing layers 6 are provided, from among the side wall portions of the blocks constituting the ground-contacting elements 5, a localized high edge pressure can be obtained by means of the effect of the reinforcing layers 6 when driving on a road surface in which the coefficient of friction of the road surface is sufficiently high to cause the ground-contacting elements 5 to deform, as is the case on snow. Therefore the edges of the ground-contacting element 5 can be made to cut into the snow to a greater extent, and as a result the performance on snow can be improved. This effect becomes more pronounced by employing a reinforcing layer 6 having a material modulus at least equal to 200 MPa.

Further, the mean thickness of the reinforcing layers 6 is less than 0.5 mm, and therefore when driving on a road surface in which the coefficient of friction of the road surface is insufficient to cause the ground-contacting element 5 to deform, as is the case on ice, the contact pressure of the ground-contacting element 5 as a whole can be maintained more uniformly while allowing the edge effect to be exhibited, and thus the performance on ice can be maintained.

Typically, the material modulus used in pneumatic tyres is normally 0.1 to 50 MPa, at most approximately 100 MPa. In terms of materials having a relatively high material modulus of at least 200 MPa, for use in the reinforcing layers 6 as in the present mode of embodiment, in addition to materials based on natural resin, as discussed hereinabove (including rubber materials), those in which a material based on natural resin is mixed with or impregnated into fibres, those comprising thermoplastic resins, or those comprising a laminate or mixture of these, may for example be used, and these may also be used in combination with woven or non-woven fabric impregnated with materials based on natural resin, for example, for the purpose of improving adhesion with the ground-contacting element 5 or to provide additional reinforcement. Fibrous materials such as woven or non-woven fabrics impregnated with materials based on natural resin may be used alone as the reinforcing layer 6.

It should be noted that for example in the case of a tyre tread in which the direction of rotation of the tyre is prescribed, a reinforcing layer 6 may be provided on only one side wall portion 5a, from among the two block side wall portions 5a.

Further, in the present mode of embodiment the bottom surface 4a of the auxiliary groove 4 is not covered by the reinforcing layer 6, but for the purpose of improving productivity when preparing the reinforcing layers 6, for example, the configuration may be such that the edge portions of the reinforcing layers 6 in the radially inward direction of the tyre are extended in such a way that the reinforcing layer 6 covers part or all of the bottom surfaces of the grooves 3, 4.

Further, in the present mode of embodiment reinforcing layers 6 are provided only on the block side wall portions 5a facing the auxiliary grooves 4, but reinforcing layers 6 may also be provided in the same way on the block side wall portions facing the main grooves 3. By this means it is possible for the effect whereby the performance on snow is improved by means of the reinforcing layers 6 to be exhibited in a lateral direction, in other words in respect to steering performance, while maintaining the performance on ice.

Next, a tread for a pneumatic tyre according to a second mode of embodiment of the present invention will be described based on Figure 3. Figure 3 is an enlarged sectional view illustrating schematically a ground-contacting element in a tread for a pneumatic tyre according to a second mode of embodiment of the present invention.

As illustrated in Figure 3, ground-contacting elements (blocks) 5 having a ground-contacting surface 2 which comes into contact with the road surface when the tyre is rolling, and demarcated by main grooves 3 and auxiliary grooves 4, are formed in the tread 1 of the second mode of embodiment, in the same way as in the first mode of embodiment discussed hereinabove. Two narrow incisions 7 opening at the ground-contacting surface 2 are formed in the ground-contacting element 5 of the second mode of embodiment.

In the same way as in the first mode of embodiment discussed hereinabove, in the ground-contacting element 5, reinforcing layers 6 are provided on the block side wall portions 5a facing in the direction of rotation of the tyre, and further, reinforcing layers (second reinforcing layers) 8 shaped such that a portion thereof is exposed in the ground-contacting surface 2 are also formed in the narrow incisions 7. It should be noted that apart from the narrow incisions and the reinforcing layers 8, the configuration in the second mode of embodiment is the same as in the first mode of embodiment discussed hereinabove, and therefore a description thereof is omitted here.

As illustrated in Figure 3, reinforcing layers 8 are formed such that they face the narrow incision 7 over an area at least equal to 50% of the two wall surface portions of the narrow incision 7, and such that they have a mean thickness of 0.5 mm or less, in the same way as in the reinforcing layers 6 in the first mode of embodiment discussed hereinabove, and the material used is the same as that used for the reinforcing layers 6 in the first mode of embodiment.

In the present mode of embodiment, by disposing such narrow incisions 7 and reinforcing layers 8, a localized high edge pressure can be obtained not only at the edges of the ground-contacting element 5, but also at the edges of the narrow incisions 7, by means of the effect of the reinforcing layers 8, when driving on a road surface in which the coefficient of friction of the road surface is sufficiently high to cause the ground-contacting elements 5 to deform, as is the case on snow.

Therefore the edges of the ground-contacting element 5 and the narrow incisions 7 can be made to cut into the snow to a greater extent, and as a result the performance on snow can be improved more effectively.

Further, the mean thickness of the reinforcing layers 8 is less than 0.5 mm, and therefore when driving on a road surface in which the coefficient of friction of the road surface is insufficient to cause the ground-contacting element 5 to deform, as is the case on ice, the contact pressure of the ground-contacting element 5 as a whole can be maintained more uniformly while allowing the edge effect to be exhibited, and thus the performance on ice can be maintained.

It should be noted that in the present mode of embodiment the bottom surface of the narrow incision 7 is not covered by the reinforcing layer 8, but for the purpose of improving productivity when preparing the reinforcing layers 8, for example, the configuration may be such that the reinforcing layer 8 covers the bottom surface (bottom portion) of the narrow incision 7.

Next, a tread for a pneumatic tyre according to a third mode of embodiment of the present invention will be described based on Figure 4. Figure 4 is an enlarged sectional view illustrating schematically a ground-contacting element in a tread for a pneumatic tyre according to a third mode of embodiment of the present invention.

As illustrated in Figure 4, ground-contacting elements (blocks) 5 having a ground-contacting surface 2 which comes into contact with the road surface when the tyre is rolling, and demarcated by main grooves 3 and auxiliary grooves 4, are formed in the tread 1 of the third mode of embodiment, in the same way as in the first mode of embodiment discussed hereinabove. In the same way as in the first mode of embodiment, in the ground-contacting element 5 of the third mode of embodiment, reinforcing layers 6 are provided on the block side wall portions 5 facing the auxiliary grooves 4. The reinforcing layers 6 in the third mode of embodiment are formed within an area extending from a height position that is separated by 1.6 mm towards the outside in the radial direction of the tyre from the bottom surface 4a of the auxiliary groove 4, to the height position of the ground-contacting surface 2 of the ground-contacting element 5. The material used for the reinforcing layers 6, and the mean thickness thereof, are the same as those of the reinforcing layer 6 in the first mode of embodiment.

In the third mode of embodiment, the reinforcing layers 6 are provided over an area substantially equal to 70% of the side wall portions 5a. In the same way as in the first mode of embodiment discussed hereinabove, the reinforcing layers 6 have a dimension in the width direction that is substantially the same as the length of the blocks 5 in the width direction (this is not shown in the drawings). It should be noted that the reinforcing layers 8 of the narrow incisions 7 in the second mode of embodiment discussed hereinabove may also be formed within an area extending from a height position that is separated by 1.6 mm towards the outside in the radial direction of the tyre from the bottom portion of the narrow incision 7, to the height position of the ground-contacting surface 2 of the ground-contacting element 5, in the same way as in the third mode of embodiment.

It should be noted that in the first to third modes of embodiment discussed hereinabove, the configuration may be such that the dimension of the reinforcing layers 6 and the reinforcing layers 8 in the width direction is shorter than the length in the width direction of the side wall portions of the blocks 5 in which they are provided.

In the present mode of embodiment, the degree of freedom for establishing the reinforcing layers 6 on the block side wall portions of the ground-contacting element 5 can be increased. In other words, the degree of freedom for positioning the reinforcing layer on the block side wall portion and optimizing the range setting can be enhanced so as to improve the performance on snow while maintaining the performance on ice. It is therefore possible to provide the reinforcing layers 6 in a position and within a range whereby, when driving on a road surface in which the coefficient of friction of the road surface is sufficient to cause the ground-contacting element 5 to deform, as is the case on snow, a localized high edge pressure can be obtained at the edges of the ground-contacting element 5 by means of the effect of the reinforcing layers 6, and when driving on a road surface in which the coefficient of friction of the road surface is insufficient to cause the ground-contacting element 5 to deform, as is the case on ice, the contact pressure of the ground-contacting element 5 as a whole can be maintained more uniformly while allowing the edge effect to be exhibited.

Particularly preferred modes of embodiment of the present invention have been described hereinabove, but the present invention may be modified and implemented in the form of various embodiments without limitation to the modes of embodiment shown in the diagrams.

## Embodiment

Next, in order to clarify the advantages of the present invention, an explanation will be given of the results of tests conducted by employing a simulation (finite element method) using commercially available computer software, for a conventional example provided with reinforcing layers having a publicly known form, and three types of ground-contacting element (see Figure 3) of treads for pneumatic tyres according to embodiment 2 (second mode of embodiment) of the present invention.

The size of the ground-contacting element (block) model corresponding to the conventional example and to the three types according to embodiment 2 was in each case a rectangular block having a short side of length 20 mm, a long side of length 30 mm and a height of 8 mm, formed using the same rubber-based material, the narrow incisions each having a width of 0.4 mm and depth of 7 mm and opening in a surface corresponding to the ground-contacting surface of the ground-contacting element (block). In each model, reinforcing layers having a different material modulus and/or mean thickness were provided, as indicated in Table 1.

With suitable loading applied to the ground-contacting element models set in this way, the maximum contact pressure generated in the ground-contacting element under road surface conditions corresponding to snow, and the coefficient of friction under road surface conditions corresponding to ice, were obtained. The abovementioned calculated values were expressed as indices, with the conventional example set to 100, and with larger numbers being more satisfactory.

[Table 1]

| | Embodiment 1 | Embodiment 2 | Embodiment 3 | Conventional example |
|---|---|---|---|---|
| Mean thickness of reinforcing layer (mm) | 0.15 | 0.3 | 0.4 | 0.5 |
| Material modulus of reinforcing layer (MPa) | 300 | 300 | 900 | 100 |
| Maximum contact pressure on snow (index) | 117 | 158 | 202 | 100 |
| Coefficient of friction on ice (index) | 111 | 105 | 98 | 100 |

As shown in Table 1, it can be confirmed that when the treads for a pneumatic tyre according to embodiments 1 to 3 are employed, the performance on snow can be effectively improved, and the performance on ice can be maintained.

Explanation of the reference numbers

**[0066]**

1 Tread for pneumatic tyre
2 Ground-contacting surface
3 Main groove
4 Auxiliary groove
5 Ground-contacting element (block)
5a Side wall portion of ground-contacting element
6 Reinforcing layer
7 Narrow incision (sipe)
8 Reinforcing layer of narrow incision

## Claims

1. Tread (1) for a pneumatic tyre having a ground-contacting surface (2) which comes into contact with a road surface when the tyre is rolling and being formed from at least one rubber composition, the tread having at least one main groove (3) which is formed in the tread (1), a plurality of auxiliary grooves (4), and blocks (5) which are ground-contacting elements delimited by the main groove (3) and the auxiliary grooves (4), the blocks (5) having a plurality of side wall portions (5a) facing the main groove (3) and/or the auxiliary grooves (4), and at least one side wall portion from the plurality of side wall portions in the abovementioned block (5) having a reinforcing layer (6), **characterized by** the abovementioned reinforcing layer (6) having a mean thickness less than 0.5 mm and being provided such that it faces the main groove (3) and/or the auxiliary groove (4) over an area at least equal to 50% of the abovementioned side wall portion (5a), and the abovementioned reinforcing layer (6) having a material modulus at least equal to 200 MPa.

2. Tread (1) for a pneumatic tyre according to Claim 1, **characterized in that** the abovementioned reinforcing layer (6) is provided on at least two side wall portions of the abovementioned block (5), facing in the direction of rotation of the tyre.

3. Tread (1) for a pneumatic tyre according to Claim 1 or Claim 2, **characterized in that** the abovementioned block (5) further has at least one narrow incision (7), and two wall surface portions of the abovementioned narrow incision (7) each have second reinforcing layers (8), the abovementioned second reinforcing layers (8) having a mean thickness of less than 0.5 mm and being provided such that they face the narrow incision (7) over an area at least equal to 50% of each wall surface portion of the abovementioned narrow incision (7).

4. Tread (1) for a pneumatic tyre according to any one of Claims 1 to 3, **characterized in that** the mean thickness of the abovementioned reinforcing layer (6) and/or the abovementioned second reinforcing layer (8) is at most equal to 0.3 mm.

5. Tread (1) for a pneumatic tyre according to Claim 4, **characterized in that** the mean thickness of the abovementioned reinforcing layer (6) and/or the abovementioned second reinforcing layer (8) is at most equal to 0.2 mm.

6. Tread (1) for a pneumatic tyre according to any one of Claims 1 to 5, **characterized in that** the abovementioned reinforcing layer (6) is formed on the side wall portion (5a) of the abovementioned block (5) within an area extending from a height position that is 1.6 mm towards the outside in the radial direction of the tyre relative to the height, in the radial direction of the tyre, of the bottom surface of the main groove (3) or the auxiliary groove (4), to the height position, in the radial direction of the tyre, of the ground-contacting surface of the ground-contacting element (5).

7. Tread (1) for a pneumatic tyre according to Claim 3, **characterized in that** the abovementioned second reinforcing layer (8) is formed on the side wall portion of the abovementioned narrow incision (7) within an area extending from a height position that is 1.6 mm towards the outside in the radial direction of the tyre relative to the height, in the radial direction of the tyre, of the bottom portion of the abovementioned narrow incision (7), to the height position, in the radial direction of the tyre, of the ground-contacting surface of the ground-contacting element (5).

8. Pneumatic tyre **characterized in that** it has a tread (1) according to any one of Claims 1 to 7.

## Patentansprüche

1. Profil (1) für einen pneumatischen Reifen, der eine bodenkontaktierende Oberfläche (2) aufweist, die in Kontakt mit einer Straßenoberfläche kommt, wenn der Reifen rollt, und der aus wenigstens einer Gummizusammensetzung ausgebildet ist, wobei das Profil wenigstens eine in dem Profil (1) ausgebildete Hauptrille (3), eine Vielzahl von Hilfsrillen (4) und Blöcke (5) aufweist, bei denen es sich um bodenkontaktierende Elemente handelt, die durch die Hauptrille (3) und die Hilfsrillen (4) begrenzt sind, wobei die Blöcke (5) eine Vielzahl von Seitenwandabschnitten (5a), die der Hauptrille (3) und/oder den Hilfsrillen (4) zugewandt sind, aufweisen, und wenigstens ein Seitenwandabschnitt aus der Vielzahl von Seitenwandabschnitten in dem oben erwähnten Block (5) eine verstärkende Schicht (6) aufweist,
**dadurch gekennzeichnet, dass** die oben erwähnte verstärkende Schicht (6) eine mittlere Dicke von weniger als 0,5 mm aufweist und so vorgesehen ist, dass sie der Hauptrille (3) und/oder der Hilfsrille (4) über einen Bereich zugewandt ist, der wenigstens gleich 50% des oben erwähnten Seitenwandabschnitts (5a) ist, und dass die oben erwähnte verstärkende Schicht (6) einen Materialmodul von wenigstens gleich 200 MPa aufweist.

2. Profil (1) für einen pneumatischen Reifen nach Anspruch 1, **dadurch gekennzeichnet, dass** die oben erwähnte verstärkende Schicht (6) auf wenigstens zwei Seitenwandabschnitten des oben erwähnten Blocks (5) vorgesehen ist und in die Drehrichtung des Reifens weist.

3. Profil (1) für einen pneumatischen Reifen nach Anspruch 1 oder Anspruch 2, **dadurch gekennzeichnet, dass** der oben erwähnte Block (5) ferner wenigstens einen schmalen Einschnitt (7) aufweist und zwei Wandflächenabschnitte des oben erwähnten schmalen Einschnitts (7) jeweils zweite verstärkende Schichten (8) aufweisen, wobei die oben erwähnten zweiten verstärkenden Schichten (8) eine mittlere Dicke von weniger als 0,5 mm aufweisen und so vorgesehen sind, dass sie dem schmalen Einschnitt (7) über einen Bereich von wenigstens gleich 50% jedes Wandflächenabschnitts des oben erwähnten schmalen Einschnitts (7) zugewandt sind.

4. Profil (1) für einen pneumatischen Reifen nach einem der Ansprüche 1 bis 3, **dadurch gekennzeichnet, dass** die mittlere Dicke der oben erwähnten verstärkenden Schicht (6) und/oder der oben erwähnten zweiten verstärkenden Schicht (8) höchstens gleich 0,3 mm ist.

5. Profil (1) für einen pneumatischen Reifen nach Anspruch 4, **dadurch gekennzeichnet, dass** die mittlere Dicke der oben erwähnten verstärkenden Schicht (6) und/oder der oben erwähnten zweiten verstärkenden Schicht (8) höchstens gleich 0,2 mm ist.

6. Profil (1) für einen pneumatischen Reifen nach einem der Ansprüche 1 bis 5, **dadurch gekennzeichnet, dass** die oben erwähnte verstärkende Schicht (6) auf dem Seitenwandabschnitt (5a) des oben erwähnten Blocks (5) in einem Bereich ausgebildet ist, der sich von einer 1,6 mm entsprechenden nach außen in radialer Richtung des Reifens befindlichen Höhenposition relativ zu der in radialer Richtung des Reifens befindlichen Höhe der unteren Fläche der Hauptrille (3) oder der Hilfsrille (4) bis zu der in radialer Richtung des Reifens befindlichen Höhenposition der bodenkontaktierenden Oberfläche des bodenkontaktierenden Elements (5) erstreckt.

7. Profil (1) für einen pneumatischen Reifen nach Anspruch 3, **dadurch gekennzeichnet, dass** die oben erwähnte zweite verstärkende Schicht (8) auf dem Seitenwandabschnitt des oben erwähnten schmalen Einschnitts (7) in einem Bereich ausgebildet ist, der sich von einer 1,6 mm entsprechenden nach außen in radialer Richtung des Reifens befindlichen Höhenposition relativ zu der in radialer Richtung des Reifens befindlichen Höhe des unteren Abschnitts des oben erwähnten schmalen Einschnitts (7) bis zu der in radialer Richtung des Reifens befindlichen Höhenposition der bodenkontaktierenden Oberfläche des bodenkontaktierenden Elements (5) erstreckt.

8. Pneumatischer Reifen, **dadurch gekennzeichnet, dass** er ein Profil (1) nach einem der Ansprüche 1 bis 7 aufweist.

## Revendications

1. Bande de roulement (1) pour un pneumatique comportant une surface de contact avec le sol (2) qui vient en contact avec une surface de sol lorsque le pneumatique roule et étant constitué d'au moins une composition de caoutchouc, la bande de roulement comportant au moins une rainure principale (3) qui est formée dans la bande de roulement (1), une pluralité de rainures auxiliaires (4), et des pavés (5) qui sont des éléments de contact avec le sol délimités par la rainure principale (3) et les rainures auxiliaires (4), les pavés (5) comportant une pluralité de parties de paroi latérale (5a) faisant face à la rainure principale (3) et/ou aux rainures auxiliaires (4), et au moins une partie de paroi latérale parmi la pluralité de parties de paroi latérale dans ledit pavé (5) comportant une couche de renforcement (6), **caractérisée en ce que** ladite couche de renforcement (6) présente une épaisseur moyenne inférieure à 0,5 mm et est placée de façon à faire face à la rainure principale (3) et/ou aux rainures auxiliaires (4) sur une surface égale à au moins 50 % de ladite partie de paroi latérale (5a), et ladite couche de renforcement (6) présentant un module de matériau au moins égal à 200 MPa.

2. Bande de roulement (1) pour un pneumatique selon la revendication 1, **caractérisée en ce que** ladite couche de renforcement (6) est placée sur au moins deux parties de paroi latérale dudit pavé (5), orientées dans une direction de rotation du pneumatique.

3. Bande de roulement (1) pour un pneumatique selon la revendication 1 ou la revendication 2, **caractérisée en ce que** ledit pavé (5) comporte en outre au moins une incision étroite (7), et deux parties de paroi latérale de ladite incision étroite (7) comportent chacune des secondes couches de renforcement (8), lesdites secondes couches de renforcement (8) présentant une épaisseur moyenne inférieure à 0,5 mm et étant placées de façon à faire face à l'incision étroite (7) sur une surface au moins égale à 50 % de chaque partie de paroi latérale de ladite incision étroite (7).

4. Bande de roulement (1) pour un pneumatique selon l'une quelconque des revendications 1 à 3, **caractérisée en ce que** l'épaisseur moyenne de ladite couche de renforcement (6) et/ou desdites secondes couches de renforcement (8) est au plus égale à 0,3 mm.

5. Bande de roulement (1) pour un pneumatique selon la revendication 4, **caractérisée en ce que** l'épaisseur moyenne de ladite couche de renforcement (6) et/ou desdites secondes couches de renforcement (8) est au plus égale à 0,2 mm.

6. Bande de roulement (1) pour un pneumatique selon l'une quelconque des revendications 1 à 5, **caractérisée en ce que** ladite couche de renforcement (6) est formée sur la partie de paroi latérale (5a) dudit pavé (5) au sein d'une surface s'étendant d'une position en hauteur qui est située à 1,6 mm vers l'extérieur dans la direction radiale du pneumatique par rapport à la hauteur, dans la direction radiale du pneumatique, de la surface inférieure de la rainure principale (3) ou de la rainure auxiliaire (4), jusqu'à la position en hauteur, dans la direction radiale du pneumatique, de la surface de contact avec le sol de l'élément de contact avec le sol (5).

7. Bande de roulement (1) pour un pneumatique selon la revendication 3, **caractérisée en ce que** ladite seconde couche de renforcement (8) est formée sur la partie de paroi latérale de ladite incision étroite (7) au sein d'une surface s'étendant d'une position en hauteur qui est située à 1,6 mm vers l'extérieur dans la direction radiale du pneumatique par rapport à la hauteur, dans la direction radiale du pneumatique, de la partie inférieure de ladite incision étroite (7), jusqu'à la position en hauteur, dans la direction radiale du pneumatique, de la surface de contact avec le sol de l'élément de contact avec le sol (5).

8. Pneumatique **caractérisé en ce qu'**il comporte une bande de roulement (1) selon l'une quelconque des revendications 1 à 7.

[Figure 1]

FIG.1

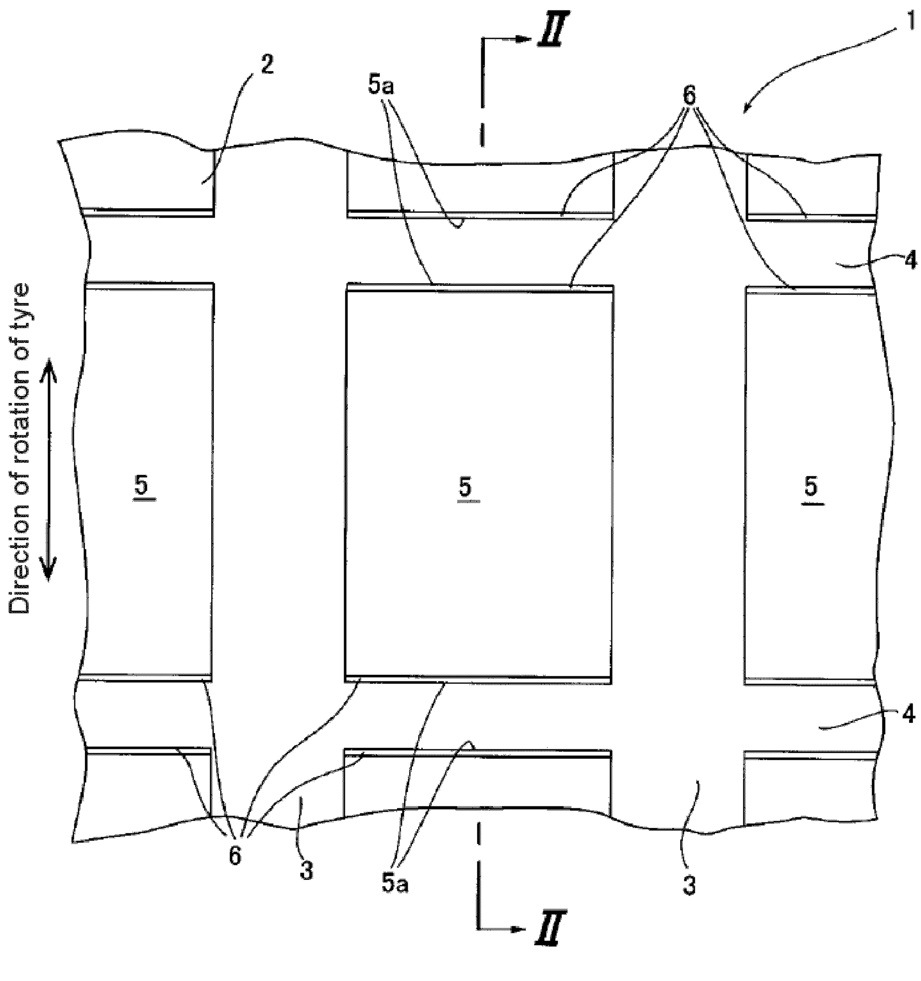

[Figure 2]

FIG.2

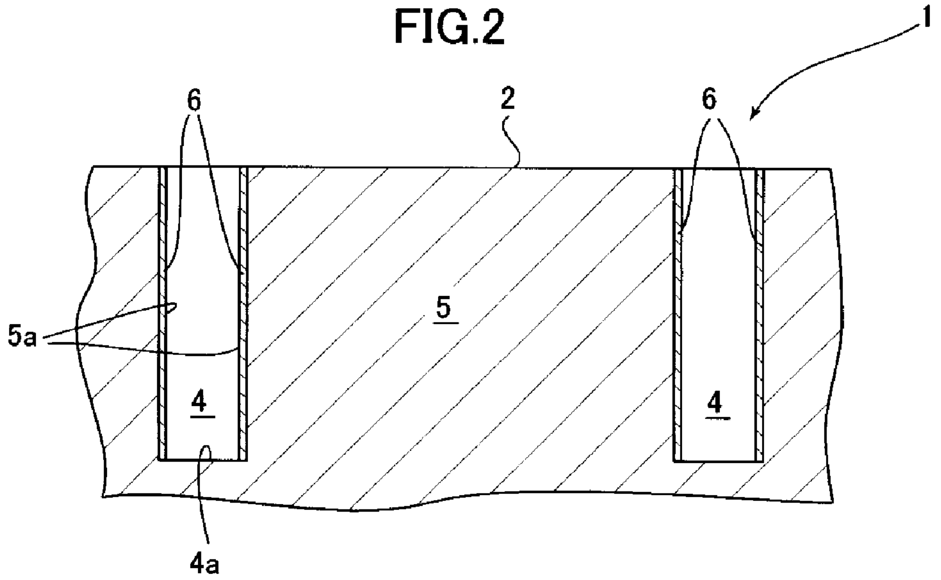


[Figure 3]

FIG.3

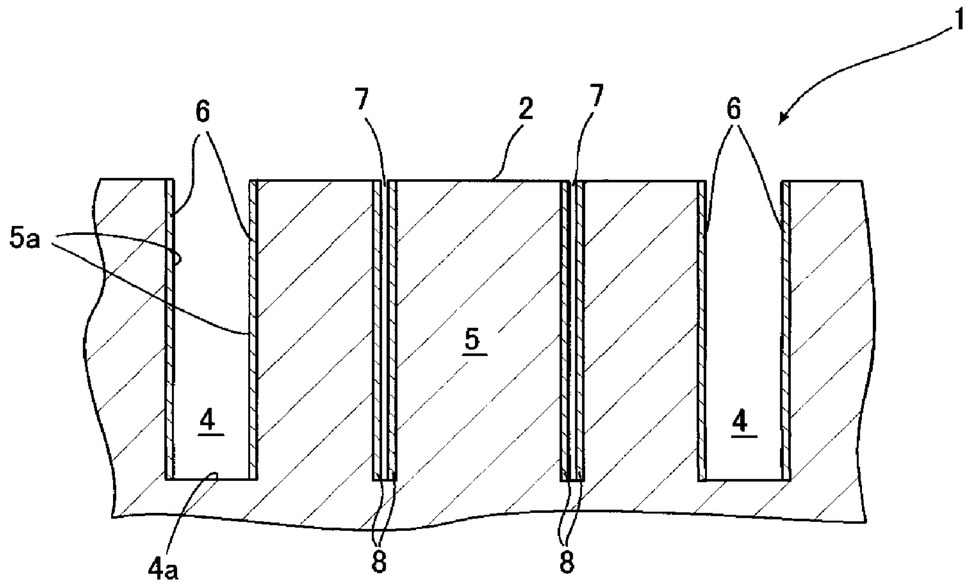

[Figure 4]

FIG.4

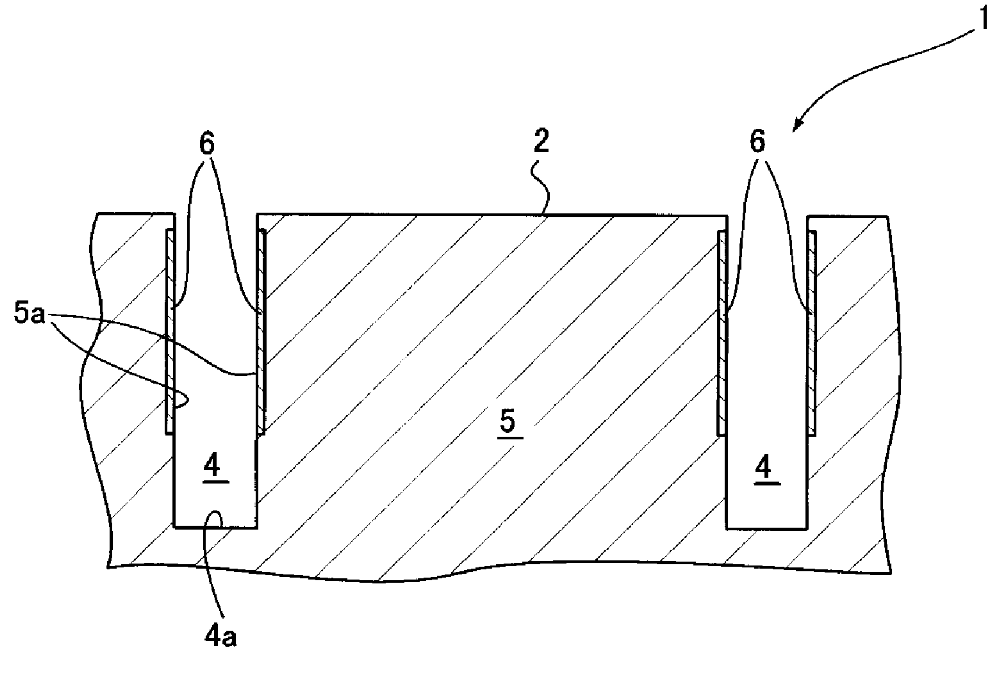

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP KOKAI1995047814 A
- JP 2010105509 A
- WO 2005044594 A


### Non-patent literature cited in the description


- *ASTM D 5992-96,* September 2006